# EUROPÄISCHE PATENTSCHRIFT

(11) **EP 2 800 954 B1**
(45) Veröffentlichungstag und Bekanntmachung des Hinweises auf die Patenterteilung: **01.09.2021**
(21) Anmeldenummer: 12812252.0
(22) Anmeldetag: 20.12.2012
(51) Int. Cl.: G01F 23/296

(54) **ULTRASCHALL-FÜLLSTANDSGEBER**
ULTRASONIC LEVEL INDICATOR
INDICATEUR ULTRASONIQUE DE NIVEAU

(30) Priorität: 05.01.2012 DE 102012200118; 19.01.2012 DE 102012200757
(43) Veröffentlichungstag der Anmeldung: 12.11.2014
(73) Patentinhaber: Vitesco Technologies GmbH, 30165 Hannover (DE)
(72) Erfinder: KUEHNEL, Frank, 65760 Eschborn (DE); PFEIFFER, Karl-Friedrich, 91058 Erlangen (DE); ROTH, Manfred, 90613 Großhabersdorf (DE)
(86) Internationale Anmeldenummer: PCT/EP2012/076519
(87) Internationale Veröffentlichungsnummer: WO 2013/102581

(56) Entgegenhaltungen:
- DE-A1-102009 060 002
- US-A1- 2005 284 217
- US-B1- 6 536 275

## Beschreibung

Gegenstand der Erfindung ist ein Füllstandsgeber, bestehend aus einem Schallführungsrohr und einem Füllstandssensor mit einem Ultraschall-Sendeempfänger und einer Sensorelektronik.

Derartige Füllstandsgeber mit einem Ultraschall-Sendeempfänger, welcher Ultraschallwellen erzeugt und abgibt und reflektierte Ultraschallwellen empfängt, werden zur Messung von Füllständen in Kraftstoffbehältern von Kraftfahrzeugen eingesetzt und sind daher bekannt. Zum Schutz vor den aggressiven Bestandteilen in Kraftstoffen sind der Schallgeber und die Elektronik außerhalb des Kraftstoffbehälters angeordnet. Nachteilig hierbei ist, dass für die Messung die Wand des Kraftstoffbehälters durchdrungen werden muss, was aufgrund des Materials des Kraftstoffbehälters nicht unproblematisch ist. Es ist weiter bekannt, den Sendeempfänger im Kraftstoffbehälter anzuordnen. Dies erfordert jedoch eine Kapselung des Sendeempfängers, wobei die Kapselung so gestaltet sein muss, dass der schallabgebende Bereich des Sendeempfängers in den Kraftstoff reicht und nur der verbleibende Teil des Sendeempfängers gekapselt ist. Die hierfür erforderliche Dichtung führt zu einem nicht unerheblichen Aufwand des Füllstandssensors.

Die Druckschrift US 2005/0284217 A1 offenbart einen Ultraschallsensor, wobei die dazugehörige Sensorelektronik außerhalb eines Tanks, in dem der Ultraschallsensor untergebracht ist, angeordnet ist.

Die Druckschrift US 6,536,275 B1 offenbart einen Ultraschallsensor, der an seiner Gehäuseaußenseite ein Substrat aufweist. Dadurch lässt sich eine Scheibe, auf der das Substrat angeordnet ist mit einem anderen Gehäuseteil verlöteten. Die dazugehörige Sensorelektronik des Ultraschallsensors ist außerhalb des Gehäuses an einer trockenen Stelle untergebracht.

Die Druckschrift DE 10 2009 060 002 A1 offenbart einen kontaktlos arbeitenden Sensor, beispielsweise zur Druckmessung, mit einem Sensorelement und einem Gehäuse, der dadurch gekennzeichnet ist, dass das Sensorelement ein Teil des Gehäuses ist und dieses zur Messseite hin abschließt und abdichtet.

Aufgabe der vorliegenden Erfindung ist es daher, einen Füllstandsgeber zu schaffen, der sich geschützt im Kraftstoffbehälter anordnen lässt, wobei die geschützte Anordnung einfach und kostengünstig ausgeführt sein soll und der Montageaufwand gering ist.

Erfindungsgemäß wird die Aufgabe dadurch gelöst, dass der Ultraschall-Sendeempfänger in einem Gehäuse, bestehend aus einem keramischen Substrat und einem mit dem Substrat verlöteten Metalldeckel, angeordnet ist, wobei der Ultraschall-Sendeempfänger mit zumindest dem schallabgebenden Bereich mit dem Substrat verbunden ist, dass das keramische Substrat als Leiterplatte und Träger für eine neben dem Ultraschall-Sendeempfänger in dem Gehäuse angeordneten Sensorelektronik dient und dass das keramische Substrat mit dem Metalldeckel hermetisch dicht verbunden ist.

Die Anordnung des Sendeempfängers auf dem keramischen Substrat erlaubt eine zuverlässige und sichere Befestigung des Sendeempfängers. Mit der gleichzeitigen Verwendung des keramischen Substrats als Gehäusebestandteil wird ein zusätzliches Gehäuseteil eingespart. Das keramische Substrat bildet zusammen mit dem Metalldeckel ein hermetisch abgedichtetes Gehäuse und damit einen ausreichenden Schutz gegenüber dem umgebenden Kraftstoff.

Das Erzeugen von Ultraschallwellen lässt sich besonders einfach bewerkstelligen, wenn der Sendeempfänger ein Piezo-Element ist, wobei insbesondere der eigentliche Schallgeber eine piezokeramische Scheibe ist.

Die Befestigung des Sendeempfängers gestaltet sich in einer vorteilhaften Ausgestaltung besonders einfach, wenn der Sendeempfänger mit dem keramischen Substrat akustisch weich verbunden ist. In dieser Ausgestaltung bildet das keramische Substrat eine Zwischenschicht im Pfad der Ultraschallwellen.

Eine akustisch weiche Verbindung lässt sich besondere einfach mittels Kleben erreichen, wenn der Sendeempfänger elastisch mit dem keramischen Substrat verklebt ist. Grundsätzlich können für eine elastische Verklebung Kleber auf Silikon-, Acrylat- oder Polyurethan-Basis zum Einsatz kommen. Die Auswahl des entsprechenden Klebers kann aber auch in Abhängigkeit von den Einsatzbedingungen gewählt werden. So erhält man eine elastische Verklebung mit einem Kleber, wenn dessen Glasübergangstemperatur unter der Einsatztemperatur des Füllstandssensors liegt.

Technologisch einfach ist gemäß einer anderen Ausgestaltung das Verbinden des Sendeempfängers mittels Weichlöten.

In einer anderen Ausgestaltung ist der Sendeempfänger mit dem keramischen Substrat akustisch hart verbunden, so dass das keramische Substrat mit dem Sendeempfänger einen Verbundschwinger bildet. Der Vorteil dieser Ausgestaltung besteht darin, dass die Effizienz der Schallauskopplung erhöht wird.

Eine akustisch harte Verbindung lässt sich in einfacher Weise mittels Kleben erreichen, wenn der Sendeempfänger starr mit dem keramischen Substrat verklebt ist. Hierfür geeignet sind Kleber auf Epoxidharz-, Acrylat- oder Polyurethan-Basis. Die Auswahl des entsprechenden Klebers kann aber auch in Abhängigkeit von den Einsatzbedingungen gewählt werden. So erhält man eine starre Verklebung mit einem Kleber, wenn dessen Glasübergangstemperatur über der Einsatztemperatur des Füllstandssensors liegt.

Eine besonders dauerhafte Verbindung wird erzielt, wenn der Sendeempfänger mittels Sintern mit der Keramik verbunden ist. Diese Verbindung ist insbesondere bei erhöhten Anforderungen an die Festigkeit aufgrund der Einsatzbedingungen von Vorteil.

In Abhängigkeit von der thermischen Belastbarkeit der Bauteile kann die Verbindung auch durch Hartlöten hergestellt werden.

In einer anderen Ausgestaltung ist das Gehäuse so im Schallführungsrohr angeordnet, dass die Schallwellen parallel zum Boden des Kraftstoffbehälters und dass das Schallführungsrohr so ausgebildet ist, dass die Schallwellen anschließend um 90° zur Flüssigkeitsoberfläche umgelenkt werden. Damit werden die Schallwellen zunächst parallel zur Flüssigkeitsoberfläche abgegeben, wodurch die prinzipbedingte sogenannte Totstrecke des Sendeempfängers in den Bodenbereich des Kraftstoffbehälters verlegt wird, so dass der minimal messbare Füllstand dadurch nicht beeinflusst wird. Erst anschließend erfolgt die Umlenkung der Schallwellen durch das Schallführungsrohr, um den tatsächlichen Füllstand zu ermitteln.
Gemäß einer weiteren vorteilhaften Ausgestaltung ist das Gehäuse gedämpft im Schallführungsrohr angeordnet. Dadurch wird eine Übertragung von Schwingungen vom keramischen Substrat auf das Schallführungsrohr vermieden und störende Einflüsse auf das eigentliche Messsignal verringert.

An einem Ausführungsbeispiel wird die Erfindung näher erläutert. Es zeigen in:
- Fig. 1: den schematischen Aufbau des Füllstandssensors und
- Fig. 2: die Anordnung eines Füllstandsgebers in einem Kraftstoffbehälter.

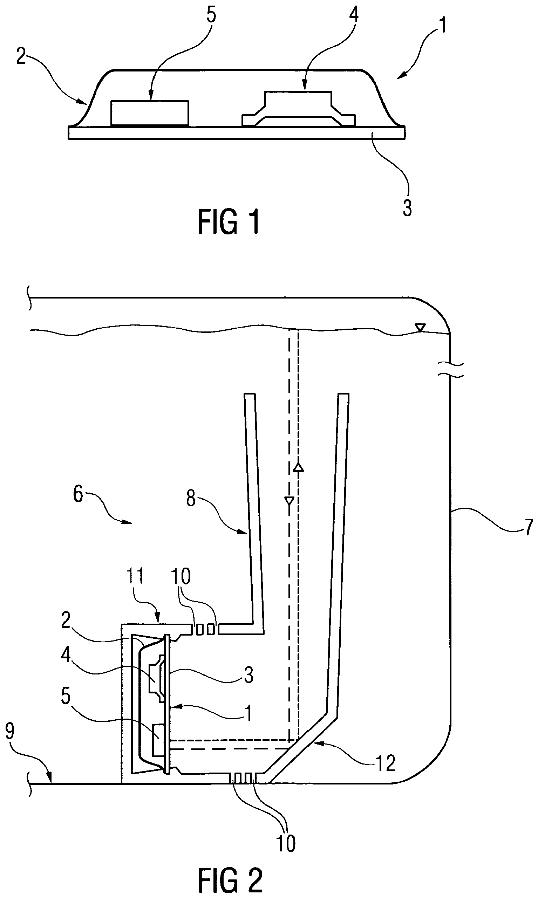

Der Füllstandssensor in Fig. 1 besteht aus einem Gehäuse 1, welches von einem Metalldeckel 2 und einem keramischen Substrat 3 gebildet wird. Der Metalldeckel 2 ist für eine hermetisch dichte Verbindung mit dem Substrat 3 verlötet, wobei das Substrat 3 in den Bereichen, in denen der Metalldeckel 2 auf dem Substrat 3 aufliegt metallisiert ist. Das keramische Substrat 3 dient neben seiner Funktion als Gehäuse zugleich als Leiterplatte und Träger für eine Sensorelektronik 4 und einen Ultraschall-Sendeempfänger 5 zum Erzeugen und Aussenden von Ultraschallwellen und zum Empfangen von Ultraschallwellen, der starr auf dem Substrat 3 mit einem Epoxidharzkleber aufgeklebt ist. In diesem Beispiel ist der eigentliche Schallgeber des Sendeempfängers 5 eine piezokeramische Scheibe.

Fig. 2 zeigt den Füllstandsgeber 6 in einem Kraftstoffbehälter 7. Der Füllstandsgeber 6 ist über das Schallführungsrohr 8 am Boden 9 des Kraftstoffbehälters 7 befestigt. Das Schallführungsrohr 8 besitzt im Bodenbereich mehrere Öffnungen 10, über die Kraftstoff in das Schallführungsrohr 8 eindringen kann. In diesem Bereich des Schallführungsrohres 8 ist das Gehäuse 1 des Füllstandssensors in Einbaulage senkrecht eingebaut, so dass die vom Sendeempfänger 5 erzeugten Ultraschallwellen durch das senkrecht angeordnete, keramische Substrat 3 parallel zum Boden 9 des Kraftstoffbehälters 7 ausgesandt werden. Hierzu ist das Gehäuse 1 in Aufnahmen 11 des Schallführungsrohres 8 eingesetzt, wobei nicht näher dargestellte Dämpfungselemente in den Aufnahmen die Übertragung von Schwingungen auf das Schallführungsrohr 8 minimieren zu können. Die Schallwellen sind symbolisch mit Pfeilen dargestellt. Nach einer Wegstrecke treffen die Schallwellen auf einen im Schallführungsrohr 8 integrierten Reflektor 12, der die Schallwellen um 90° zur Flüssigkeitsoberfläche umlenkt. Die an der Flüssigkeitsoberfläche reflektierten Schallwellen laufen denselben Weg wieder zurück, bis sie vom Sendeempfänger 5 empfangen und mit Hilfe der Sensorelektronik 4 derart aufbereitet werden, dass der Füllstandssensor ein dem Füllstand entsprechendes elektrisches Signal bereitstellt, welches einer nicht dargestellten Anzeigevorrichtung für den Füllstand im Kraftfahrzeug zugeführt wird.

## Patentansprüche

1. Füllstandsgeber, bestehend aus einem Schallführungsrohr und einem Füllstandssensor mit einem Ultraschall-Sendeempfänger und einer Sensorelektronik,
**dadurch gekennzeichnet, dass** der Ultraschall-Sendeempfänger (5) in einem Gehäuse (1), bestehend aus einem keramischen Substrat (3) und einem mit dem Substrat (3) verlöteten Metalldeckel (2), angeordnet ist, dass der Ultraschall-Sendeempfänger (5) mit zumindest dem schallabgebenden Bereich mit dem Substrat (3) verbunden ist, dass das keramische Substrat (3) als Leiterplatte und Träger für eine neben dem Ultraschall-Sendeempfänger (5) in dem Gehäuse (1) angeordnete Sensorelektronik (4) dient und dass das keramische Substrat (3) mit dem Metalldeckel (2) hermetisch dicht verbunden ist.

2. Füllstandsgeber nach Anspruch 1, **dadurch gekennzeichnet, dass** der Ultraschall-Sendeempfänger (5) ein Piezo-Element ist.

3. Füllstandsgeber nach Anspruch 1 oder 2, **dadurch gekennzeichnet, dass** der Ultraschall-Sendeempfänger (5) mit dem keramischen Substrat (3) akustisch weich verbunden ist.

4. Füllstandsgeber nach Anspruch 3, **dadurch gekennzeichnet, dass** der Ultraschall-Sendeempfänger (5) mit dem keramischen Substrat (3) weich verlötet ist.

5. Füllstandsgeber nach Anspruch 3, **dadurch gekennzeichnet, dass** der Ultraschall-Sendeempfänger (5) mit dem keramischen Substrat (3) elastisch verklebt ist.

6. Füllstandsgeber nach Anspruch 1 oder 2, **dadurch gekennzeichnet, dass** der Ultraschall-Sendeempfänger (5) mit dem keramischen Substrat (3) akustisch hart verbunden ist.

7. Füllstandsgeber nach Anspruch 6, **dadurch gekennzeichnet, dass** der Ultraschall-Sendeempfänger (5) mit dem keramischen Substrat (3) starr verklebt ist.

8. Füllstandsgeber nach Anspruch 6, **dadurch gekennzeichnet, dass** der Ultraschall-Sendeempfänger (5) mit dem keramischen Substrat (3) mittels Sintern verbunden ist.

9. Füllstandsgeber nach zumindest einem der vorhergehenden Ansprüche 1 bis 8, **dadurch gekennzeichnet, dass** das Gehäuse (1) so im Schallführungsrohr (8) angeordnet ist, dass die Schallwellen parallel zum Boden (9) des Kraftstoffbehälters (7) abgegeben werden und dass das Schallführungsrohr (8) so ausgebildet ist, dass die Schallwellen anschließend um 90° zur Flüssigkeitsoberfläche umgelenkt werden.

10. Füllstandsgeber nach zumindest einem der vorhergehenden Ansprüche 1 bis 8, **dadurch gekennzeichnet, dass** das Gehäuse (1) gedämpft im Schallführungsrohr (8) angeordnet ist.

## Claims

1. Filling level indicator, composed of a sound-conducting tube and a filling level sensor having an ultrasonic transceiver and a sensor electronics unit, **characterized in that** the ultrasonic transceiver (5) is disposed in a housing (1) which is composed of a ceramic substrate (3) and a metal cover (2) soldered to the substrate (3), **in that** the ultrasonic transceiver (5) by way of at least the sound-emitting region is connected to the substrate (3), **in that** the ceramic substrate (3) serves as a circuit board and support for a sensor electronics unit (4) which is disposed next to the ultrasonic transceiver (5) in the housing (1), and **in that** the ceramic substrate (3) is connected to the metal cover (2) in a hermetically sealed manner.

2. Filling level indicator according to Claim 1, **characterized in that** the ultrasonic transceiver (5) is a piezo element.

3. Filling level indicator according to Claim 1 or 2, **characterized in that** the ultrasonic transceiver (5) is connected to the ceramic substrate (3) in an acoustically soft manner.

4. Filling level indicator according to Claim 3, **characterized in that** the ultrasonic transceiver (5) is soft-soldered to the ceramic substrate (3).

5. Filling level indicator according to Claim 3, **characterized in that** the ultrasonic transceiver (5) is elastically bonded to the ceramic substrate (3) by an adhesive.

6. Filling level indicator according to Claim 1 or 2, **characterized in that** the ultrasonic transceiver (5) is connected to the ceramic substrate (3) in an acoustically hard manner.

7. Filling level indicator according to Claim 6, **characterized in that** the ultrasonic transceiver (5) is rigidly bonded to the ceramic substrate (3) by an adhesive.

8. Filling level indicator according to Claim 6, **characterized in that** the ultrasonic transceiver (5) is connected to the ceramic substrate (3) by means of sintering.

9. Filling level indicator according to one of preceding Claims 1 to 8, **characterized in that** the housing (1) is disposed in the sound-conducting tube (8) such that the soundwaves are emitted parallel to the base (9) of the fuel vessel (7), and **in that** the sound-conducting tube (8) is configured such that the soundwaves are subsequently deflected by 90° in relation to the liquid surface.

10. Filling level indicator according to at least one of preceding Claims 1 to 8, **characterized in that** the housing (1) is disposed so as to be damped in the sound-conducting tube (8).

## Revendications

1. Capteur de niveau de remplissage, comprenant un tube de guidage de son et un capteur de niveau de remplissage pourvu d'un émetteur-récepteur à ultrasons et d'une électronique de capteur, **caractérisé en ce que** l'émetteur-récepteur à ultrasons (5) est disposé dans un boîtier (1), comprenant un substrat en céramique (3) et un couvercle métallique (2) soudé au substrat (3), **en ce que** l'émetteur-récepteur à ultrasons (5) est relié au moins à la zone émettrice de son pourvue du substrat (3), **en ce que** le substrat en céramique (3) est utilisé comme carte de circuit imprimé et support pour une électronique de capteur (4) disposée à côté de l'émetteur-récepteur à ultrasons (5) dans le boîtier (1) et **en ce que** le substrat en céramique (3) est relié hermétiquement au couvercle métallique (2).

2. Capteur de niveau de remplissage selon la revendication 1, **caractérisé en ce que** l'émetteur-récepteur à ultrasons (5) est un élément piézo.

3. Capteur de niveau de remplissage selon la revendication 1 ou 2, **caractérisé en ce que** l'émetteur-récepteur à ultrasons (5) est relié au substrat en céramique (3) de manière acoustiquement souple.

4. Capteur de niveau de remplissage selon la revendication 3, **caractérisé en ce que** l'émetteur-récepteur à ultrasons (5) est soudé de manière souple au substrat en céramique (3).

5. Capteur de niveau de remplissage selon la revendication 3, **caractérisé en ce que** l'émetteur-récepteur à ultrasons (5) est collé élastiquement au substrat en céramique (3).

6. Capteur de niveau de remplissage selon la revendication 1 ou 2, **caractérisé en ce que** l'émetteur-récepteur à ultrasons (5) est relié de manière acoustiquement rigide au substrat en céramique (3).

7. Capteur de niveau de remplissage selon la revendication 6, **caractérisé en ce que** l'émetteur-récepteur à ultrasons (5) est collé rigidement au substrat céramique (3).

8. Capteur de niveau de remplissage selon la revendication 6, **caractérisé en ce que** l'émetteur-récepteur à ultrasons (5) est relié au substrat en céramique (3) par frittage.

9. Capteur de niveau de remplissage selon l'une au moins des revendications précédentes 1 à 8, **caractérisé en ce que** le boîtier (1) est disposé dans le tube de guidage de son (8) de manière à ce que les ondes sonores soient émises parallèlement au fond (9) du réservoir de carburant (7) et **en ce que** le tube de guidage de son (8) est conçu de manière à ce que les ondes sonores soient ensuite déviées de 90 ° par rapport à la surface du liquide.

10. Capteur de niveau de remplissage selon l'une au moins des revendications précédentes 1 à 8, **caractérisé en ce que** le boîtier (1) est disposé de manière amortie dans le tube de guidage de son (8).
